(19) Europäisches Patentamt
European Patent Office
Office européen des brevets

(11) **EP 4 517 386 A2**

(12) **EUROPEAN PATENT APPLICATION**

(43) Date of publication:
**05.03.2025 Bulletin 2025/10**

(21) Application number: **24191278.1**

(22) Date of filing: **26.07.2024**

(51) International Patent Classification (IPC):
***G01S 19/20*** *(2010.01)*

(52) Cooperative Patent Classification (CPC):
**G01S 19/20;** G01S 19/44

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 EP 23190362**

(71) Applicant: **u-blox AG**
**8800 Thalwil (CH)**

(72) Inventors:
• **SHERET, Ian**
**Hitchin (GB)**
• **DORAHY, Hayden**
**Leatherhead (GB)**
• **JULIEN, Olivier**
**Oberrieden (CH)**
• **HIDE, Christopher**
**Reigate (GB)**

(74) Representative: **Elkington and Fife LLP**
**Prospect House**
**8 Pembroke Road**
**Sevenoaks, Kent TN13 1XR (GB)**

(54) **INTEGRATION FOR GNSS MEASUREMENT PROCESSING**

(57) A GNSS receiver and a method of processing GNSS measurements are disclosed. The method includes defining (220) a state vector, comprising state variables. It further includes obtaining (230) a posterior probability density for the state vector. State information is inferred based on the posterior probability density. This inferring involves integrating the posterior probability density. The integrating comprises dividing (234) a domain of the posterior probability density into a plurality of slices along a dimension associated with one of the state variables; integrating (236) each slice separately, to produce a respective integration result for each slice; and combining (238) the integration results for the slices.

FIG. 2B

**Description**

FIELD OF THE INVENTION

The present invention relates to Global Navigation Satellite Systems (GNSS). In particular, it relates to a method and apparatus for processing GNSS measurements to infer state information, by integrating a posterior probability density function.

BACKGROUND OF THE INVENTION

Techniques for GNSS positioning are well known in the art. Existing GNSS include the Global Positioning System (GPS), Galileo, GLONASS, and BeiDou Navigation Satellite System (BDS), also referred to herein simply as "BeiDou". Each GNSS comprises a constellation of satellites, also known in the art as "space vehicles" (SVs), which orbit the earth. Typically, each SV transmits a number of satellite signals. These are received by a GNSS receiver, for which it is desired to calculate state information, such as a navigation solution. The GNSS receiver can generate a number of ranging and/or Doppler measurements using the signals, to derive information about the distance between the receiver and respective satellites (and/or the rate of change of these distances). When a sufficient number of measurements can be made, the receiver's position and/or velocity can then be calculated.

Various effects can introduce errors into the measurements. In turn, errors in the measurements can lead to errors in the resulting state estimate. Sources of error include, for example, multipath interference. This may be a particular problem for navigation systems of road vehicles. In the signal environments commonly encountered by road vehicles, multipath interference can be caused by reflection or occlusion of satellite signals by other vehicles, or by buildings or vegetation.

Other sources of error include variations in atmospheric delay, as the satellite signals pass through the troposphere or ionosphere. In addition to such "innocent" sources of error, there may be malicious interference, such as jamming or spoofing signals. Jamming signals are transmitted with the deliberate aim to prevent a GNSS receiver from receiving satellite signals successfully. Spoofing involves transmitting a signal that emulates a real satellite signal, with the intention that a GNSS receiver will mistakenly acquire and track the spoofed signal. This can be used by an attacker to deliberately introduce false information into the multilateration calculation, leading to a false position or velocity estimate.

Obviously, it would be desirable to calculate a state estimate as accurately as possible in spite of all of these sources of error. However, it is inevitable that they will sometimes cause the state estimate to be inaccurate. It is desirable to know whether a state estimate is accurate or not - and to quantify the expected accuracy. For example, in autonomous driving applications, it is very important to be able to determine when the uncertainty in the vehicle position is too great for the position estimate to be used safely to control navigation of the vehicle.

In this context, the concept of an "alert limit" or "alarm limit" is sometimes used. This may be defined as the maximum allowable error (for example, error in position) that can be permitted without triggering a hazardous situation.

The concept of "integrity risk" is also used. This may be defined as the probability that the actual position error exceeds the alert limit without any alert flags at a given moment in time. The integrity risk thus describes the level of trust or confidence in the GNSS position estimate.

The uncertainty associated with a position estimate may be quantified in terms of a "protection level". This is defined as a statistical error bound, computed such that the probability of the position error exceeding the bound is less than or equal to a target integrity risk. The protection level may be provided in terms of a radius, in which case the protection level defines a circle in which there is a (quantifiably) high probability of the vehicle being located. A protection level can be used in conjunction with an alert limit, to alert a user of a navigation application, or to trigger other mitigating actions in an automated system. Whenever the protection level exceeds the alert limit, the system alerts the user or takes the necessary mitigating actions, as appropriate. There is, however, always a small risk that the position estimate deviates from the true position by more than the reported protection level. One of the aims of an integrity monitoring system is to minimise this risk by estimating the position or error bound - for example, the protection level - as reliably as possible.

EP 3 859 397 A1 discloses a method for determining a protection level of a position estimate using a single epoch of GNSS measurements. The method includes: specifying a prior probability density $P(x)$ of a state $x$; specifying a system model $h(x)$ that relates the state $x$ to observables $z$ of the measurements; quantifying quality indicators $q$ associated with the measurements; specifying a non-Gaussian residual error probability density model $f(r|\theta, q)$ and fitting model parameters $\theta$ using experimental data; and defining a posterior probability density $P(x|z, q, \theta)$; estimating the state $x$; and computing the protection level by integrating the posterior probability density $P(x|z, q, \theta)$ over the state $x$. EP 3 859 397 A1 proposes the particular example of Student's T-distribution, as the non-Gaussian residual error probability density model.

## SUMMARY OF THE INVENTION

As explained above, it is desirable to ensure the integrity of the navigation solution by computing reliable error bounds that are sufficiently tight to provide a high availability of the system. More generally, it is desirable to infer state information as accurately as possible from GNSS measurements. A key aspect in achieving these goals is to model the probability density function of errors as accurately as possible in the set of GNSS measurements that are used to infer the state information. Errors in the modelling of the probability density function are likely to give rise to errors in the resulting inferred state information. Errors in bounds on states may manifest themselves either in unduly high confidence or in unduly low confidence in the state information. Both types of error may be problematic in their own ways. For example, if too low an estimate is provided for the protection level, there is an increased risk that the true error exceeds an alarm limit without the system realising it. Conversely, if too high an estimate is provided for the protection level, the system may give too many false alarms.

It would also be desirable to perform the integration of the posterior probability density as accurately and efficiently as possible. In particular, for safety critical applications, tail risks need to be quantified accurately. "Tail risk" refers to extreme events that occur with low probability - that is, events that lie in the tails of the posterior probability density. It may be desired to integrate over the tails of the density function in order to quantify the total probability of "extreme" events occurring. In some examples, it may be desired to integrate over the tails (as defined by one or more specific thresholds), in order to determine the total probability of events occurring outside the thresholds. In other examples, it may be desired to integrate over the tails so as to find the one or more thresholds that are consistent with a predefined total probability of extreme events. For instance it may be desired to answer the question: "if we accept an integrity risk at the rate of $10^{-7}$ errors per hour (that is $10^{-7}$ "extreme" events per hour, in which the actual position error silently exceeds the alert limit), what protection level should we choose in order to achieve this.

A difficulty arises because typical methods for numerical integration of probability density functions describing GNSS measurements tend to be more accurate in the regions of the density function with the highest probability. The present inventors have recognised that such methods might not give accurate results when integrating in the tails of the probability density.

In this regard, a particular challenge arises when the GNSS measurements include carrier phase measurements. Carrier phase measurements have the potential to significantly improve the accuracy of a position estimate. However, because of the integer ambiguity inherent in each carrier phase measurement, the posterior probability density (for example, over position) is multimodal. Each mode of the distribution corresponds to one possible combination of integer values for resolving (or "fixing") the ambiguities. Integrating in the tails of these multimodal probability distributions poses a particular challenge for the integration methods that have been used for this purpose in the past.

The present inventors have also recognised that it can be advantageous to identify the modes explicitly. The information about the modes can be exploited to improve the efficiency of the integration (which may involve numerical integration), for example by implementing more targeted random sampling of the probability density. This approach can yield particular benefits in the context of non-Gaussian distributions (which allow more accurate modelling of measurement errors). Existing algorithms for dealing with integer ambiguities in carrier phase measurements tend to assume a Gaussian distribution of errors. Such algorithms allow computational efficiency at the expense of less accurate modelling of the error distribution.

A GNSS receiver and a method of processing GNSS measurements are disclosed. The method includes defining a state vector, comprising state variables. It further includes obtaining a posterior probability density for the state vector. State information is inferred based on the posterior probability density. This inferring involves integrating the posterior probability density. The integrating comprises dividing a domain of the posterior probability density into a plurality of slices along a dimension associated with one of the state variables; integrating each slice separately, to produce a respective integration result for each slice; and combining the integration results for the slices.

According to an aspect of the present disclosure there is provided a method of processing a plurality of GNSS measurements, comprising:

    obtaining the plurality of GNSS measurements;
    defining a state vector, wherein the state vector comprises state variables;
    obtaining a posterior probability density for the state vector, wherein the posterior probability density is based on one or more residual error models describing a probability distribution of errors in each of the GNSS measurements, the one or more residual error models including at least one non-Gaussian model, wherein the posterior probability density has a number of dimensions, each dimension corresponding to one of the state variables; and
    inferring state information based on the posterior probability density, wherein the inferring comprises integrating the posterior probability density,
    wherein the integrating comprises, for one of the state variables:

dividing a domain of the posterior probability density into a plurality of slices along the dimension associated with said one state variable;

integrating separately each slice of the plurality of slices to produce a respective integration result for each slice; and

combining the integration results for the slices.

Said one state variable, over which the domain is divided into slices, may be referred to as the "state of interest". The state variables may include one or more position variables. The state of interest may be one of these one or more position variables.

The state variables may comprise two or more position variables and the method may comprise integrating of the posterior probability density for each position variable, wherein the integrating comprises, for each of the position variables (individually): dividing a domain of the posterior probability density into a plurality of slices along the dimension associated with said position variable; and integrating each slice separately.

In this way, the integral may be divided up into slices along a different dimension in order to infer state information for each position variable.

In some examples, the position variables may comprise any one, any two, or all three of: an along-track position; a cross-track position; and a vertical position. These three position variables form an orthogonal system, in which the along-track position is aligned with the current direction of travel. When a GNSS receiver is stationary, the along-track position may be aligned with the last estimated direction of travel.

The number of slices may be at least 20, 50, 100, or 150. The number of slices may be less than 1000, 750, 500, 300 or 250. All combinations of these upper and lower limits are hereby disclosed. In some examples, the number of slices is about 200 (optionally exactly 200).

Each slice may have a finite width in the dimension of interest (the dimension associated with said one state variable). That is, each slice may relate to a defined, bounded integration domain in the dimension of interest. Each slice may be relatively narrow compared with the overall domain of integration spanned by the set of slices.

Each slice may have a width, in the dimension of interest, that is selected based on a width of a peak in the posterior probability density. The peak whose width is used may be the peak associated with the maximum likelihood state. The slice-width may be set in proportion to the peak width. In particular, the slice-width may be set equal to a predetermined fraction or proportion (less than or equal to 100%) of the peak width, such as half of the peak width. The peak width may be defined as a full-width at half-maximum (FWHM).

Each slice may be unbounded or loosely bounded in the dimensions other than the dimension of interest - that is, the dimensions associated with state variables other than said one state variable. Here, "unbounded" means that the integral is over all space, for the "other" dimensions. "Loosely" bounded means that the bounds on the "other" dimensions are much broader than the bounds on the dimension of interest. Each slice may extend, in the "other" dimensions, across the full domain of integration over which the state information is to be inferred. All the slices may have the same (broad) bounds, or may be similarly unbounded, in the dimensions other than the dimension of interest.

The set of slices may span a contiguous domain in the dimension of interest. A width of this domain may be selected based on a width of a peak in a second posterior probability density. The second posterior probability density may be calculated based on pseudorange measurements only, and not on any carrier phase measurements. The peak in the second posterior probability density will typically be wider than the peak in the posterior probability density that is based on all measurements (that is, including also carrier phase measurements).

The integrating may comprise (or consist of) integrating over a plurality of nuisance states, wherein the nuisance states include all states of the state vector other than the state of interest (for example, the position variable of interest).

The plurality of GNSS measurements may include a plurality of carrier phase measurements.

The integrating may comprise numerical integration, but is not limited to this.

The plurality of GNSS measurements may include pseudorange measurements. The posterior probability density may be constrained by pseudorange measurements.

The at least one non-Gaussian model may include any one or any combination of two or more of:

a Student's T-distribution, modelling a pseudorange measurement;

a Student's T-distribution, modelling a carrier range measurement (in particular, a carrier range measurement whose integer ambiguity has been fixed); and

a cyclic probability density, modelling a carrier range measurement (in particular, a float carrier range measurement, whose integer ambiguity remains unfixed).

The state variables may also include velocity and/or time variables.

A single residual error model may describe a probability distribution of one or more of the GNSS measurements. That is, the error in one GNSS measurement may be modelled as a univariate distribution, or the errors in two or more GNSS measurements may be modelled jointly as a multivariate distribution. Each GNSS measurement is modelled by one of the (one or more) residual error models. The number of residual error models is therefore less than or equal to the number of GNSS measurements. At one extreme, each GNSS measurement could be modelled by a separate (univariate) residual error model. At the other extreme, all GNSS measurements could be modelled together by a single (multivariate) residual error model.

Of specific interest, for the present disclosure, are the one or more residual error models that describe the probability distribution of errors in those carrier phase measurements).

The residual error model(s) may be generated in advance for use in the inference method. The residual error model(s) may be generated from empirical data, comprising GNSS measurements, quality indicators associated with those GNSS measurements, and residual errors associated with those GNSS measurements. Collectively, these may be referred to as empirical or training data.

Obtaining the posterior probability density may comprise calculating it. Calculating the posterior probability density may comprise multiplying the probability distribution of the errors by a prior probability density of the state vector.

The posterior probability density may be calculated based on GNSS measurements from a single measurement epoch.

The state variables may include carrier phase ambiguities. The carrier phase ambiguities may comprise float carrier phase ambiguity values.

The inferred state information may comprise at least one of: a state estimate; and an error bound for the state estimate.

The state estimate may be a position estimate. The error bound may be an error bound for the position estimate.

An error bound for the state vector defines probabilistic bounds on the range of each of the state variables. In some cases, bounds may be calculated for state variables (for example, position variables) in addition to estimating the state variables themselves. In other cases, the bounds may be calculated without estimating the state variables themselves.

Calculating an estimate of one or more state variables of the state vector may comprise calculating a maximum likelihood estimate of the state variables. Similarly, calculating the error bound may comprise evaluating the posterior probability density of the state variables to calculate bounds on those variables.

The error bound for the position estimate may comprise or consist of a protection level.

Integrating each slice separately may comprise, for every slice, at least one of: importance sampling; an MCMC method; and approximation of the posterior probability density with a mathematical model which can be integrated analytically.

The first two alternatives are examples of numerical integration techniques. Various numerical techniques can be used to enhance the efficiency of numerical integration, based on knowledge of the identified set of modes. The latter alternative does not use numerical integration. The mathematical model used to approximate the posterior probability density may be a parametric model, wherein the parameters of the model are based on the identified set of modes. Suitable parametric models include (but are not limited to) mixture models, such as a Gaussian mixture model (GMM).

The integrating optionally comprises, for each slice: performing a search in that slice, to identify a set of modes of the posterior probability density, and wherein the integrating is based on the identified set of modes.

The method may further comprise outputting a list of the modes. Optionally, the method may comprise outputting each mode together with an associated probability.

Integrating each slice separately may comprise, for every slice, at least one of: importance sampling based on the identified set of modes; an MCMC method based on the identified set of modes; and approximation of the posterior probability density with a mathematical model which can be integrated analytically, wherein the mathematical model is based on the identified set of modes.

The search may be a systematic search. Here, "systematic" means that the search is deterministic rather than random/stochastic. It also means that the search is complete (in other words, exhaustive) within certain defined limits. Consequently, the search is guaranteed to find all modes satisfying the specified criteria.

In some examples, the search comprises a recursive, depth-first search over a set of carrier phase ambiguities. This means that the search over one ambiguity triggers the search over the next ambiguity, until a complete candidate set of ambiguities has been evaluated.

In some examples, the search comprises: transforming the posterior probability density into a mixture model comprising a plurality of mixture components, wherein each mixture component is a multivariate distribution; and identifying the set of modes using the mixture model, wherein each mode is associated with a respective one of the multivariate distributions.

The inventors have recognised that the modes can be identified efficiently by transforming the posterior probability density into a mixture model and identifying the set of modes using the mixture model, instead of searching the original form of the posterior probability density directly. In some examples, depending on the original form of the posterior probability density, the transforming may comprise approximating the posterior probability density by one or more different functions. However, approximating the posterior probability density in this way has been found to be advantageous, because it can allow the modes to be found more easily, without affecting the overall quality of the inference. This is because the state information can still be inferred based on the posterior probability density in its original form (that is, rather than the approximated form). In other words, the approximated form is only used to help find the modes. The modes are then used with the original form of the posterior probability density for inference (including, for example, any numerical integration).

The mixture model may comprise a sum of the mixture components. The step of identifying the set of modes using the mixture model may comprise identifying one mode per mixture component, for each of a plurality of the mixture components.

The multivariate distribution forming each mixture component may comprise a product of univariate distributions.

Each mixture component may comprise (or consist of) a linear distribution. In particular, it may comprise (or consist of) a product of linear distributions. Here, the term "linear" distribution is used to denote a distribution that is not a wrapped distribution. In one non-limiting example, each mixture component comprises a product of Student-T distributions (e.g., one Student-T distribution per carrier phase measurement).

The set of modes comprises at least two modes, optionally at least 10, 100, or 1000 modes.

The posterior probability density may be obtained in an original form that comprises a cyclic distribution for the residual error in each carrier phase measurements.

Transforming the posterior probability density optionally comprises: defining a wrapped distribution for each carrier phase measurement; and transforming the wrapped distributions into the mixture model, wherein each mode is associated with a set of integers, a, each integer being associated with a respective one of the carrier phase measurements, wherein each integer indexes a number of cycles in the respective wrapped distribution.

In some examples, the posterior probability density may be obtained in a form that already includes these wrapped distributions. In other examples, wrapped distributions are defined which approximate the obtained posterior probability density.

Inferring the state information may comprise evaluating an integral. The transforming may further comprise changing an integration domain of the integral. In particular, the integration domain may be changed so that the integration is over the set of real numbers (instead of over one cycle, for the carrier phase states).

Identifying the set of modes may comprise: defining a float cost function based on the mixture model, by relaxing the constraint that each value, a, indexing the number of cycles in the respective carrier phase measurement, is an integer; performing a first local search of the float cost function to find a float-valued state vector associated with a local minimum value of the cost function; approximating the float cost function in the region of the local minimum value by a multivariate Gaussian distribution; and identifying the set of modes based on the approximating multivariate Gaussian distribution.

The first local search may comprise solving a non-linear optimization problem. The first local search may involve using a Gauss-Newton based algorithm (for example, the Levenburg-Marquardt algorithm, or a hybrid between Newton's method and Steepest Descent, as described in Section 2.2 (equation 2.11) of "METHODS FOR NON-LINEAR LEAST SQUARES PROBLEMS" by K. Madsen, H.B. Nielsen, O. Tingleff, 2004). The first local search may be initialized by taking a Gaussian approximation to each univariate distribution and finding the minimum of the resulting approximate cost function. The minimum of this approximate cost function can be found analytically.

The first local search may be designed to find the global minimum of the cost function. However, it might not be guaranteed to always find the global minimum. It may sometimes find another local minimum near to the global minimum.

As mentioned above, each mode may be associated with a set of integers, a, each integer being associated with a respective one of the carrier phase measurements. Each integer may index a number of cycles in the respective wrapped distribution. In the approximating multivariate Gaussian distribution, the integers, a, may be replaced by real numbers a*.

The approximating multivariate Gaussian distribution may be expressed in the form of a negative log likelihood, wherein the multivariate Gaussian distribution is modelled as a quadratic function.

Identifying the set of modes based on the approximating multivariate Gaussian distribution may comprise characterising the approximating multivariate Gaussian distribution in the region of the local minimum value by a matrix, being one of: a covariance matrix; and a Hessian matrix.

Identifying the set of modes based on the approximating multivariate Gaussian distribution optionally further comprises, based on the state vector associated with the local minimum and the matrix, defining a weighted squared norm based on the matrix; and identifying candidate sets of integers, a, that are less than a threshold distance from the local minimum according to the weighted squared norm.

The step of identifying the candidate sets of integers, a, may use any suitable algorithm. This includes but is not limited to the least squares ambiguity decorrelation adjustment (LAMBDA) algorithm.

Identifying the candidate sets of integers may comprise: identifying a maximum likelihood candidate set of integers; evaluating a first weighted squared norm associated with the maximum likelihood candidate set of integers; and identifying other candidate sets of integers having a weighted squared norm within a predetermined search threshold of the first weighted squared norm.

Identifying the maximum likelihood candidate set may comprise running the LAMBDA algorithm for a first time. Identifying the other candidate sets may comprise running the LAMBDA algorithm for a second time.

The method may further comprise, for each identified candidate set of integers: defining a further cost function based on the float cost function, wherein, in the further cost function, each value, a, indexing the number of cycles in the respective carrier phase measurement is constrained to the respective integer of the candidate set of integers; and performing a second local search of the further cost function to find a state vector associated with a local minimum value of the cost function associated with the candidate set of integers.

Each second local search may comprise solving a non-linear optimization problem. The second local search may involve using a Gauss-Newton based algorithm (for example, the Levenburg-Marquardt algorithm, or a hybrid between Newton's method and Steepest Descent, as mentioned above). The second local search may be designed to find a local minimum of the cost function. This local minimum may be used to characterise the respective mode. The local minimum of the cost function may correspond to a local maximum of the posterior probability density.

The second local search may also produce a matrix characterising the curvature of the posterior probability density in the region of the local minimum. The matrix may be one of: a covariance matrix; and a Hessian matrix.

The obtained posterior probability density may be defined, prior to transforming it into the mixture model, as a product of: a plurality of first residual error models describing a probability distribution of errors in respective pseudorange measurements; a plurality of second residual error models describing a probability distribution of errors in respective first carrier phase measurements; and a plurality of third residual error models describing a probability distribution of errors in respective second carrier phase measurements, wherein the first carrier phase measurements comprise one carrier phase measurement for each GNSS frequency band for each visible GNSS constellation, the second carrier phase measurements comprise the remaining carrier phase measurements, the second residual error models do not include a phase bias term, and the third residual error models include a phase bias term.

According to this form of the posterior probability density, one carrier phase measurement for each band from each GNSS constellation is assigned to the first plurality, and the other carrier phase measurements for that band from that GNSS constellation are assigned to the second plurality.

The state vector may include a phase bias per GNSS band per GNSS constellation.

The systematic search may comprise a recursive search with a level of recursion for each carrier phase measurement, each level of recursion optionally comprising: defining one or more candidate integer ambiguity values associated with the carrier phase measurement for that level; and testing each candidate integer ambiguity value.

Defining the one or more candidate integer ambiguity values may comprise identifying a range of integer values for which the posterior probability density is above a predetermined threshold.

The state vector may include carrier phase ambiguities and testing each candidate integer ambiguity value may comprise: fixing the candidate integer ambiguity value; and performing a local search of the remaining carrier phase ambiguities and other state variables of the state vector.

The local search may comprise solving a non-linear optimization problem.

Fixing the candidate integer ambiguity value optionally comprises replacing a cyclic probability density model for the carrier phase measurement with a unimodal probability density model.

Testing each candidate integer ambiguity value optionally comprises: evaluating a probability density associated with the candidate integer ambiguity value; and comparing the probability density with a threshold.

The method may comprise, responsive to the probability density exceeding the threshold, continuing the recursion to the next level.

The method may comprise, responsive to the probability density not exceeding the threshold, terminating the current level of the recursion and returning to the preceding level.

The method optionally comprises, at the final level of recursion, identifying a mode of the posterior probability density for each of the candidate integer ambiguity values, wherein each mode is associated with a combination of the candidate integer ambiguity values from across all of the levels.

Also provided is a computer program comprising computer program code configured to cause one or more processors to perform all the steps of a method as summarised above when said computer program is run on said one or more processors.

The one or more processors may comprise or consist of one or more processors of a GNSS receiver. The computer program may be stored on a computer-readable storage medium (optionally non-transitory).

Also provided is a GNSS receiver comprising:

a signal processing unit, configured to produce a plurality of GNSS measurements; and
at least one processor, configured to:

obtain the plurality of GNSS measurements;
define a state vector, wherein the state vector comprises state variables;

obtain a posterior probability density for the state vector, wherein the posterior probability density is based on one or more residual error models describing a probability distribution of errors in each of the GNSS measurements, the one or more residual error models including at least one non-Gaussian model, wherein the posterior probability density has a number of dimensions, each dimension corresponding to one of the state variables; and infer state information based on the posterior probability density, wherein the inferring comprises integrating the posterior probability density,

wherein the integrating comprises, for one of the state variables:

dividing a domain of the posterior probability density into a plurality of slices along the dimension associated with said one state variable;
integrating separately each slice of the plurality of slices to produce a respective integration result for each slice; and
combining the integration results for the slices.

The GNSS receiver may further comprise an RF front-end. The RF front-end may be configured to receive GNSS signals via an antenna. The signal processing unit may be configured to make GNSS measurements (carrier range measurements and optionally pseudorange measurements) on the GNSS signals received by the RF front-end.

BRIEF DESCRIPTION OF THE DRAWINGS

The invention will now be described by way of example with reference to the accompanying drawings, in which:

Fig. 1 is a schematic block diagram of a GNSS receiver according to an example;

Fig. 2A is a flowchart illustrating a method performed by the GNSS receiver of Fig. 1 according to an example;

Fig. 2B is a flowchart illustrating an inference method suitable for use in the example of Fig. 2A;

Fig. 2C is a flowchart illustrating a method of integrating a slice, according to an example;

Fig. 3 is a flowchart illustrating one way of transforming the posterior probability density into a mixture model, suitable for the method of Fig. 2C;

Fig. 4 is a flowchart illustrating one way of identifying a set of modes using a mixture model, suitable for the method of Fig. 2C;

Fig. 5 is a flowchart illustrating one way of identifying modes based on an approximating Gaussian distribution, in the method of Fig. 4; and

Fig. 6 is a flowchart illustrating one way of identifying candidate sets of integers, suitable for the method of Fig. 5.

It should be noted that these figures are diagrammatic and not drawn to scale.

DETAILED DESCRIPTION

Reference will now be made in detail to examples according to the present disclosure, which are illustrated in the accompanying drawings. The described examples should not be construed as being limited to the descriptions given in this section. Other examples may have different forms.

For the understanding of the following description, it is assumed that the reader is familiar with the general principles described in EP 3 859 397 A1 (which is incorporated herein by reference).

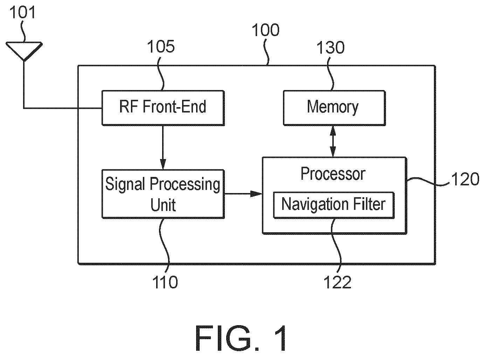

Fig. 1 is a schematic block diagram of a device according to an example. The device comprises a GNSS antenna 101 and a GNSS receiver 100. The GNSS antenna 101 is configured to receive GNSS signals. It may be configured to receive GNSS signals from a single GNSS constellation (for example, GPS), or it may be configured to receive GNSS signals from multiple constellations (for example, GPS, Galileo, GLONASS, and/or BeiDou). The GNSS receiver 100 comprises an RF front-end 105, a signal processing unit 110, a processor 120, and a memory 130. The RF front-end 105 is configured to receive GNSS signals via the GNSS antenna 101, and to output them to the signal processing unit 110. The RF front-end 105 is configured to down-convert and digitise the satellite signals received via the antenna 101. The RF front-end essentially conditions the signals for subsequent signal processing. Other typical tasks performed by the front-end include filtering and amplification. The satellite signals received at the RF front-end 105 via the antenna 101 include at least one ranging signal, such as a GPS L1 C/A signal, for each of a plurality of satellites. The signal processing unit 110 is configured to track the received GNSS signals - for example, in frequency, delay (code-phase) and carrier phase - and to produce GNSS measurements from the received GNSS signals. The processor 120 is configured to process the GNSS measurements obtained from the signal processing unit 110. While it should be understood that more than one processor may be present within the GNSS receiver 100 for implementing methods according to the present disclosure, for the purposes of the present description it is assumed that there is only one processor 120, as depicted in Fig. 1. In the present example, the processor implements a navigation filter 122 as described for the calculation of the single-epoch position bound in EP 3 859 397 A1. At each of a plurality of time increments (epochs), the navigation filter 122 estimates the current value of a state vector of state variables, optionally with their associated uncertainties. In the context of positioning, the state variables estimated by the navigation filter 122 generally include position and time variables, and optionally velocity and other variables. The memory 130 is in communication with the processor 120. The memory 130 is configured to store software/firmware to be executed by the processor 120. The software/firmware is configured to control the processor 120 to carry out a processing method according to an example. The memory may also be configured to store data that is used as input to the processor 120 and/or to store data that is output by the processor 120.

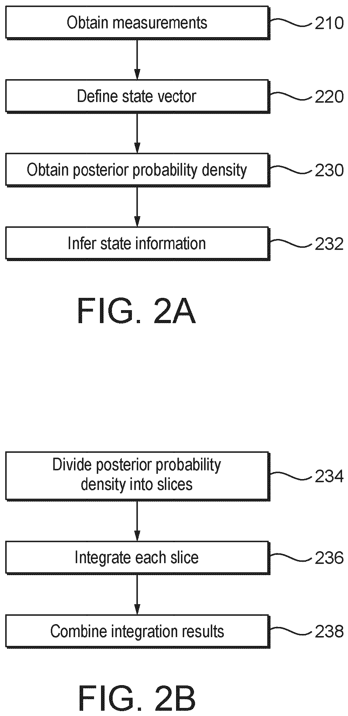

Fig. 2A illustrates a method performed by the processor 120 according to an example.

In step 210, the processor 120 obtains a plurality of GNSS measurements from the signal processing unit 110. The GNSS measurements are all obtained from the same epoch - that is, they are all made by the signal processing unit 110 at substantially the same time. The GNSS measurements include at least carrier phase measurements. In the present example, they also include pseudorange measurements. Each measurement (be it a pseudorange measurement or a carrier phase measurement) relates to a particular GNSS signal transmitted by a particular satellite. In the present example, the plurality of GNSS measurements include pseudorange and carrier phase measurements for L1 and L2 signals of several GPS satellites. Typically, in order to calculate a position and time solution from the GNSS measurements alone, measurements of at least four signals from four respective satellites are obtained. In general, the measurements may relate to different satellites of the same constellation or, satellites of different constellations.

The goal of the method of Fig. 2A is to infer state information from the GNSS measurements. The state information may comprise the values of state variables, or bounds for those state variables, or both. According to the present example, the state information of primary interest is the position of the GNSS receiver and a bound on the position of the GNSS receiver. This position bound is the protection level. In step 220, the processor 120 defines a state vector comprising state variables. The state variables include (among others) position variables. The state vector also includes state variables corresponding to integer ambiguities associated with respective carrier phase measurements.

In step 230, the processor 120 obtains a posterior probability density for the state vector. The posterior probability density is based on one or more residual error models describing a probability distribution of errors in each of the GNSS measurements. The residual error models include at least one non-Gaussian model.

According to the present example, the error in each GNSS measurement is modelled separately, as a univariate probability distribution. However, it should be understood that this is not essential. In other examples, some or all of the GNSS measurements may be modelled together in a joint, multivariate probability distribution. Conventionally, residual error models tend to assume that errors have a Gaussian distribution. This assumption is often invalid or unreliable, in practice; however, it is chosen because it can allow considerable simplification of the calculations necessary to infer state information. In examples according to the present disclosure, some (if not all) of the residual errors are modelled by non-Gaussian distributions. By relaxing the Gaussian assumption, residual error models can be designed that better approximate the true distributions of the errors. The simplified calculations associated with the Gaussian assumption are no longer suitable, which potentially increases the computational complexity; however, examples according to the present disclosure mitigate this, by providing techniques to reduce the computational burden of the calculations associated with the non-Gaussian case. It should be understood that different non-Gaussian models may be appropriate for different measurements and different application scenarios. The scope of the present disclosure is not limited to any particular non-Gaussian model (or set of models). Nevertheless, for the sake of clarity and completeness, some exemplary non-Gaussian error models will be described below.

The residual error models are defined in advance and are stored in the memory 130. The residual error model for each pseudorange comprises a Student's T-distribution, as described in EP 3 859 397 A1:

$$f_{\mathrm{pr}}(r) = \frac{\Gamma\left(\frac{v+1}{2}\right)}{\sqrt{v\pi\sigma^2}\,\Gamma\left(\frac{v}{2}\right)} \left(1 + \frac{r^2}{\sigma^2 v}\right)^{-\frac{v+1}{2}}$$

Here, r is the residual, $v$ is a degrees of freedom parameter, $\sigma$ is a scaling parameter which defines the width of the core

distribution, and $\Gamma$ is the gamma function. This distribution allows better modelling of error distributions with heavier tails than a Gaussian (normal) distribution. It has been observed by the inventors that the distribution of real pseudorange errors typically has heavy tails of this kind.

The residual error model for each carrier phase measurement comprises a probability distribution that is cyclic. In particular, according to the present example, the error model for each carrier phase is a parametric distribution of the following form:

$$f_{\text{phase}}(r) = \frac{1}{a}\left(1 + \frac{\sin(r\pi)^2}{(\sigma\pi)^2 v}\right)^{-\frac{v+1}{2}}$$

where r is the phase residual, $\sigma$ is the t-distribution scale parameter (controlling the breadth of the peaks), $v$ is the t-distribution degrees-of-freedom parameter, and $a$ is a normalisation term, selected to give a total integrated probability of one in the range (-0.5, 0.5) cycles.

It should be understood that the parameters in these error distributions can be determined empirically, so that the model approximates the real distribution of errors as closely as possible.

In step 232, the processor 120 infers state information based on the posterior probability density. This involves integrating the posterior probability density.

Fig. 2B illustrates the inference in step 232 in more detail. To simplify the explanation of the method (but without loss of generality) it will be assumed that the state information of interest is a 1-D position bound in the cross-track direction. When a vehicle is travelling on a multilane highway, for example, a position bound of this kind would be useful when attempting to infer the lane in which the vehicle is travelling. It should be understood that if state information relating to other position dimensions is desired, then the method of Fig. 2B can be repeated for each dimension of interest.

In step 234, the processor 120 divides up the domain of the integration in the dimension of interest into a plurality of slices. This means that each slice relates to a defined and relatively narrow integration domain in the dimension of interest (that is, the cross-track dimension, in the present example).

The slices may be chosen adaptively. For instance, according to the present implementation, the slices are chosen using two heuristics. The first heuristic determines the total width of the domain that will be covered by the set of slices. The second heuristic determines the width of each individual slice.

Firstly, a position solution (in at least the cross-track direction) is calculated using pseudoranges only. This is done by finding the maximum likelihood solution for a posterior probability density based solely on the pseudo range measurements. This maximum likelihood solution is associated with a peak (local maximum) in the pseudorange-based posterior. (It is intended that the local maximum should also be the global maximum of the posterior; however, in some circumstances it is theoretically possible that the global maximum may be missed.) The processor 120 evaluates the probability associated with the maximum likelihood solution (the "peak value"). Then, it finds the boundaries in the cross-track direction where the posterior probability drops below a probability threshold. The probability threshold is defined at a predetermined delta (or "depth") below the peak value. The boundaries can be found by numerical methods. In the present example, the Newton-Raphson method is used. The boundaries found in this way determine the total width of the domain that will be covered by the set of slices.

The second heuristic is based on the "full" posterior probability density - that is, the multimodal posterior probability that is based on both the pseudorange measurements and the carrier phase measurements. The processor 120 finds the maximum likelihood solution based on this posterior probability density. This corresponds to the tallest peak in the multimodal distribution. The processor 120 determines the width of this peak - in particular, the full width at half maximum (FWHM). It then selects the slice-width based on the determined FWHM value. In the present example, the width of each slice is set to be half of the FWHM value.

Together, the domain-width determined by the first heuristic and the slice-width determined by the second heuristic implicitly determine the number of slices that will be used. The domain width is divided up into non-overlapping adjacent slices of the calculated slice-width.

This strategy for configuring the slices can help to ensure that no significant portion of the posterior probability density is missed, while avoiding proliferation of slices (which could lead to an excessive increase in computational complexity). Of course, it should be understood that this way of arranging the slices is not limiting. Other strategies could be adopted, in other examples.

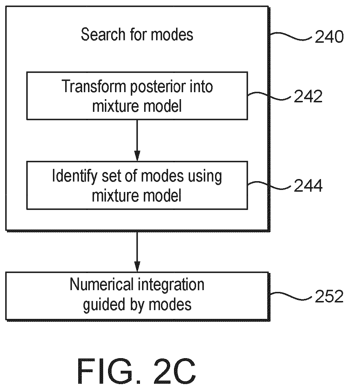

In step 236, each slice is integrated separately. A detailed example of this step will be described below, with reference to Fig. 2C. In step 238, the results of integrating over each slice are combined by integrating them, to give the result of the overall integral. This latter integration may be performed by any suitable numerical method. According to the present example, a cumulative density function is formed from the slices via a numerical cumulative integral (in particular, a cumulative trapezoidal numerical integration). Use of the trapezoidal rule, in this way, offers one reasonably accurate and computationally efficient way to combine the results of integrating the individual slices.

The integration over the slices is in fact performed twice. The first integral is across all slices, to determine a total integration result across all space. The results from the individual slices may then be normalised by dividing each of them by the total integration result. Alternatively, as in the present example, the first integral may be evaluated as a cumulative integral, as mentioned above, to form a cumulative density function. The cumulative density function may then be normalised by dividing by the total integration result. In either case, the normalisation ensures that the integral over all space is equal to unity (as expected for a probability density function).

The second integral uses the normalised results (in the present example, the normalised cumulative density function) as input. Depending on the state information that is desired, this second integral may be performed in various ways. In a first example, the aim may be to calculate the risk that the position error is greater than a specified bound - for example, greater than 1 m. To calculate this, the integral over the slices may be evaluated (using the cumulative density function) between the limits minus infinity and - 1 m and between the limits 1 m and infinity. In a second example, the risk may be specified and the aim may be to calculate the corresponding bound that achieves the specified risk. For instance, the aim may be to calculate a position bound that achieves a specified risk of $10^{-7}$ errors per hour. In this case, the cumulative density function may be inspected to determine the limit x, such that the integral between minus infinity and - x and between +x and infinity is equal to $10^{-7}$. Note, however, that the limit does not need to be symmetrical in this way. We can calculate independent upper and lower bounds, L and U, respectively, by assigning half of the risk ($0.5 \times 10^{-7}$) to each tail.

Fig. 2C shows one method for performing the integration of step 236 (for a single slice), as used in the present example. This is repeated for each slice.

Firstly, in step 240, the processor 120 searches for the significant modes of the posterior probability density (within the current slice). Then, in step 252, the processor 120 numerically integrates the posterior probability density over the slice, using information about the location of the significant modes, as determined in step 240.

The pre-processing to locate the modes of the posterior probability can help to increase the accuracy and computational efficiency of the integration. It can avoid the need, for example, to rely on numerical integration techniques to find and integrate over the relevant modes (which might incur a heavy computational cost, when using stochastic numerical integration methods, and which might miss modes depending on the random samples chosen). A variety of integration methods can benefit from knowing the locations of the modes. Suitable methods include: importance sampling, based on the identified set of modes; or an MCMC method, based on the identified set of modes. Other relevant integration methods may include the one described in Pompe et al. (Emilia Pompe, Chris Holmes, Krzysztof Łatuszyński, "A Framework for Adaptive MCMC Targeting Multimodal Distributions", January 2019, https://arxiv.org/pdf/1812.02609v2), and those referenced in the introduction section of that work.

Another possibility is approximation of the posterior probability density with a mathematical model which can be integrated analytically, wherein the approximation is based on the identified set of modes. For example, the posterior could be approximated by a Gaussian Mixture Model (GMM) with one or more mixture components centred on each of the modes. This can avoid the need for numerical integration altogether, while still avoiding the need to assume a Gaussian distribution for the residual errors.

The search in step 240 involves two stages. The first stage transforms the posterior probability density into a mixture model (see step 242). This mixture model is made up of a plurality of mixture components, each of which is a multivariate distribution. The second stage identifies the set of modes using the mixture model (see step 244).

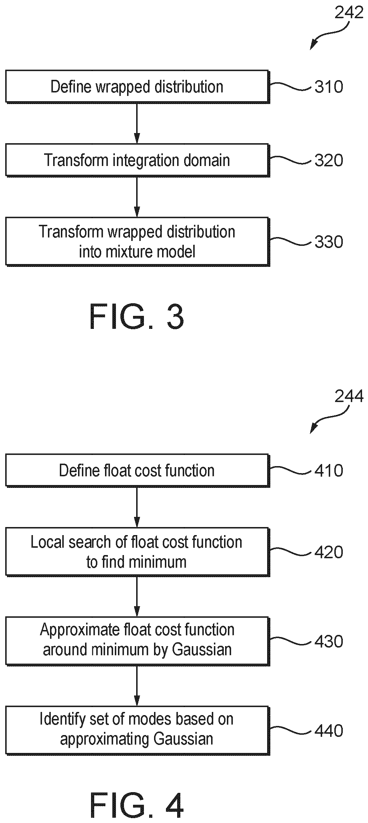

The transformation of step 242 is illustrated in more detail in Fig. 3. Firstly, in step 310, the processor 120 defines a wrapped distribution for each of the carrier phase measurements. In the present example, these wrapped distributions involve an approximation of the cyclic distribution for each carrier phase measurement in the original posterior probability density. However, in other examples, it is possible that the original posterior was already based on wrapped distributions for the carrier phase. In such cases, no approximation is necessary - the wrapped distributions in the original posterior can be used to generate the mixture model directly.

In step 320, the domain of the numerical integration is transformed. In its original form, the integration domain for each carrier phase bias state is over a single cycle. However, by extracting an observation associated with a phase bias term from the definition of the posterior probability density, it is possible to change the integration domain from this single cycle to the set of real numbers. With this transformation, all of the variables to be integrated can have the same domain - that is, the integration is over the set of real numbers for all variables.

In step 330, the numerical integration over the posterior probability density is recast as an integration over a mixture model. This is possible because the posterior is defined as a product of sums. This definition is reformulated as a sum of products. Each such product is formed from "linear" (i.e., non-wrapped) distributions. In the present example, each of these "product" distributions is a product of univariate Student-T distributions.

The transformation to a mixture model, in step 242, is followed by the step 244 of identifying the set of modes using the mixture model. This will now be described in more detail, with reference to Fig. 4.

In step 410, the processor 120 defines a cost function that will be used to search for the maximum likelihood solution for the state vector. The set of modes can then be located in the vicinity of this maximum likelihood solution. The cost function is defined, and the maximum likelihood solution found, by relaxing the constraint that the number of cycles in each carrier phase measurement is an integer. The cost function is therefore denoted the "float cost function". It is defined as a negative log likelihood, based on the form of a single one of the mixture components.

In step 420, the processor carries out a local search of the float cost function to find a float-valued state vector associated with a minimum value of the cost function. The search aims to find the global minimum, but it is not mathematically guaranteed to find it in every instance. This will depend on the shape of the cost function in each given case. In some cases, the search may (inadvertently) find another local minimum which is not the global minimum. The local search involves solving a nonlinear optimisation problem. In the present example, the local search is based on a hybrid between Newton's method and Steepest Descent, as described in Section 2.2 (equation 2.11) of "METHODS FOR NON-LINEAR LEAST SQUARES PROBLEMS" by K. Madsen, H.B. Nielsen, O. Tingleff, 2004.

The local search may be initialised in various ways. According to the present implementation, the mixture component underlying the cost function is a product of univariate distributions. To initialise the search, each of these univariate distributions is approximated by a univariate Gaussian. The cost function then takes the form of a multivariate quadratic, and the minimum cost solution can be found analytically, to provide starting coordinates for the search.

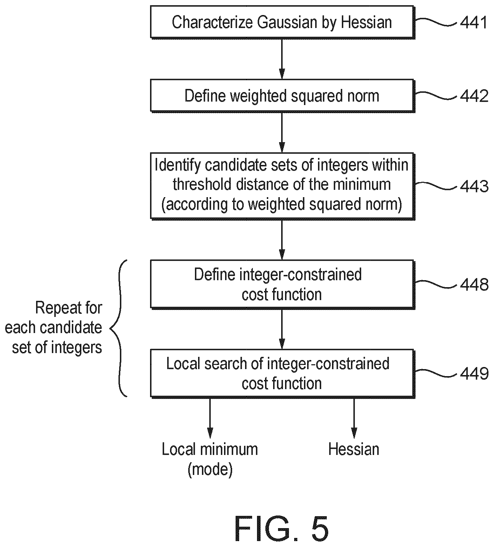

Having found the minimum in step 420, the processor 120 proceeds to step 430. In this step, the processor 120 approximates the float cost function in the vicinity of the found minimum by a multivariate Gaussian distribution. Since the cost function is expressed as a negative log likelihood, this approximation takes the form of a quadratic function. In the subsequent step 440, the processor 120 identifies the set of modes based on this approximating multivariate Gaussian distribution. This step will now be described in more detail, with reference to Fig. 5.

In step 441, the processor 120 characterises the approximating Gaussian distribution by its Hessian matrix, which conveniently emerges as a by-product of the local search algorithm. (The covariance matrix could be used, equivalently, since it is the inverse of the Hessian.) In step 442, the processor 120 defines a weighted squared norm based on the Hessian/covariance matrix. In step 443, the processor 120 identifies candidate sets of integers that are less than a threshold distance (according to the weighted squared norm) from the local minimum found in step 420. These candidate sets of integers, a, are possible solutions for "fixing" the ambiguities in the carrier phase states to integer values. Each set of integers is associated with a respective mode of the posterior probability density. However, determining the integers does not yet define the location of the mode in state space. To locate the mode, the processor 120 defines an integer-constrained cost function, in step 448. This corresponds to the float cost function defined earlier in step 410, but with the integer constraint re-applied. In step 449, the processor 120 carries out a local search of the cost function defined in step 448, in order to find the coordinates of the local minimum - in other words, the state vector that characterises the position of the corresponding local peak in the posterior probability density. This is defines the location of the mode in state space. The local search 449 is again performed using the hybrid between Newton's method and steepest descent. This optimization algorithm again produces as an output a Hessian (or covariance) matrix characterising the curvature of the cost function in the neighbourhood of the local minimum (mode). This is useful as it characterizes the sharpness of the peak in the posterior probability density associated with this particular mode.

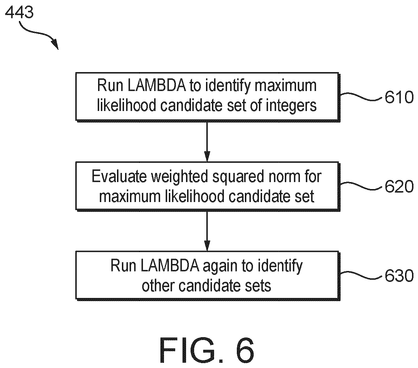

Steps 448 and 449 are repeated for each candidate set of integers found in step 443. The details of that step will now be described with reference to Fig. 6.

In the present implementation, the search for candidate sets of integers is based on the LAMBDA algorithm (Teunissen P, (1995) The least-squares ambiguity decorrelation adjustment: a method for fast GPS integer ambiguity estimation, J Geod 70(1-2):65-82). The LAMBDA algorithm enforces the integer constraint. It is run once (in step 610) to identify the maximum likelihood candidate set of integers. In step 620, the weighted squared norm (as defined previously in step 442) is evaluated for this maximum likelihood set of integers. A second instance of the LAMBDA algorithm is then run in step 630. This time, the algorithm is configured not to search for the single best set of integers, but instead to find all sets of integers whose weighted squared norm differs from that of the best set by less than a search threshold. This search threshold is set empirically to ensure liberal detection - that is, to discover all significant modes and to err slightly on the side of finding some additional, less significant modes.

Having described the method by reference to the flowcharts of Figs. 2A to 6, we now provide a mathematical derivation, for completeness.

**Notation and problem definition**

The data **y** contain both linear observations $(y_i \in \mathbb{R})$ (e.g., pseudorange measurements) and phase observations (represented in cycles, $y_{jk} \in [0,1]$):

$$y_i = h_i(\theta, \mathbf{z}) + \epsilon_i$$

$$y_{jk} = h_{jk}(\theta, \mathbf{z}) + \phi_j + \epsilon_{jk}$$

There are $n$ linear observations. The phase observations are contaminated with an unknown phase bias $\phi_j$; there are $m$ distinct phase biases, and $n_j$ phase observations affected by each bias. A model $\mathbf{h}$ relates states $\theta$ and $\mathbf{z}$ to the observations, where $\theta$ is the state of interest, and $\mathbf{z}$ is contains $p$ linear (i.e. non-phase) nuisance states. Linear observations are affected by measurement noise $\varepsilon_i$, which has a probability density function $f_i(x)$ with $x \in \mathbb{R}$. Phase observations are affected by measurement noise $\varepsilon_{jk}$, which has a probability density function $\tilde{f}_{jk}(x)$ with $x \in [0,1]$. The terms $h_{jk}(\theta, \mathbf{z})$, $\phi_j$, and $\varepsilon_{jk}$ all represent phases in the range [0, 1], and addition of these terms is taken to be modulo 1.

Inference on the states $\theta$, $\mathbf{z}$ and $\phi$ given the observations y and prior information $I$ starts with Bayes theorem:

$$\text{prob}(\theta, \mathbf{z}, \phi \mid \mathbf{y}, I) = \frac{\text{prob}(\mathbf{y} \mid \theta, \mathbf{z}, \phi, I) \cdot \text{prob}(\theta, \mathbf{z}, \phi \mid I)}{\text{prob}(\mathbf{y} \mid I)}$$

Taking the prior term $\text{prob}(\theta, \mathbf{z}, \phi \mid I)$ to be uniform, the posterior probability distribution on the states can be inferred up to a constant of proportionality $S$:

$$\text{prob}(\theta, \mathbf{z}, \phi \mid \mathbf{y}, I) \cdot S = \text{prob}(\mathbf{y} \mid \theta, \mathbf{z}, \phi, I)$$

$$= \left( \prod_{i=1}^{n} f_i \left( y_i - h_i(\theta, \mathbf{z}) \right) \right) \cdot \left( \prod_{j=1}^{m} \prod_{k=0}^{n_j-1} \tilde{f}_{jk} \left( y_{jk} - h_{jk}(\theta, \mathbf{z}) - \phi_j \right) \right)$$

$$(1)$$

The linear nuisance states $\mathbf{z}$ and the phase nuisance states $\phi$ can be marginalised out:

$$\text{prob}(\theta \mid \mathbf{y}, I) = \int_{\mathbf{z} \in \mathbb{R}^p} \int_{\phi \in [0,1]^m} \text{prob}\left(\theta, \mathbf{z}, \phi \mid \mathbf{y}, I\right) d\phi \, dz$$

$$(2)$$

Note that, when integrating within each slice, the position variables other than the position in the dimension of interest are considered nuisance states.

The constant of proportionality $S$ can be inferred from the fact that the integral of $\text{prob}(\theta \mid \mathbf{y}, I)$ with respect to $\theta$ must equal 1. This is enforced (and the value of $S$ is thereby determined) by integrating over all space - that is, over all slices - and normalizing the density function using the result. This integration refers to the first integration of step 238, described previously above.

Then, let us assume that the state information to be determined is a protection level for a given risk. The objective is therefore to evaluate a credible interval $(L, U)$ such that the risk the true value falls outside this interval is $\alpha$, and the left and right tails share this risk equally:

$$\frac{\alpha}{2} = \int_{-\infty}^{L} \text{prob}\left(\theta \mid \mathbf{y}, I\right) d\theta = \int_{U}^{\infty} \text{prob}\left(\theta \mid \mathbf{y}, I\right) d\theta.$$

These integrals are evaluated in the second integration of step 238, discussed above. That is, in the final step, when determining the interval, they are reduced to numerical integrals over slices.

**Solution**

The major challenge in evaluating the position bound $(L, U)$ is that the posterior probability distribution defined in Equation (1) is difficult to numerically integrate. This difficulty comes from several factors:

- There are typically of the order of 40 states in total, including the state of interest $\theta$, the nuisance linear states $\mathbf{z}$ and the phase biases $\phi$.

- The problem is highly multimodal, due to the cyclic nature of the phase observations. There can be thousands of significant modes, scattered in unpredictable locations within the high-dimensional state space.
- We are interested in quantifying the risk of rare events when we form position bounds, with a typical acceptable risk $\alpha$ around $10^{-7}$ per hour.
- In order to implement an embedded real time automotive system (for example), it would be desirable to be able to evaluate the position bound within a few seconds, on computing hardware suitable for mass market applications.

The difficulties are resolved in part by dividing up the integration into a separate integral for each of a plurality of slices. The present approach is also based on a systematic search to locate important modes (in each slice), followed by importance sampling in each slice to evaluate the integral for that slice. Knowledge of the modes can be used to help the importance sampling algorithm move between modes efficiently and effectively.

**Transforming the posterior into a mixture**

The posterior probability distribution presented in Equation (1) is highly multimodal, and it is not obvious where modes lie in the high dimensional state space. Our strategy is to transform this single complicated distribution into a mixture of simpler distributions, in each slice. Each component in this mixture will generate a mode (or possibly more than one mode) in the posterior, and the task of locating modes in the posterior turns into the easier task of locating the maxima of each mixture component.

This transformation is done in three main stages. The first stage (see step 310 in Fig. 3) defines wrapped distributions which can be used in place of the existing phase error distributions; this approximation enables everything that follows. The second stage (see step 320 in Fig. 3) changes the integration domain from $\mathbb{R}^p \cdot [0,1]^m$ to $\mathbb{R}^{p+m}$; this is helpful because this is the domain of our mixture components. The final stage (see step 330 in Fig. 3) reorders terms into the form of a mixture (i.e., the sum of a number of simpler distributions).

**Approximating with wrapped distributions**

Our first step 310 in tackling the integral is to define (for each slice) an approximation to the phase measurement error model $\tilde{f}_{jk}(x)$ which is a wrapped distribution:

$$\tilde{f}_{jk}(x) \approx \sum_{a=-\infty}^{\infty} f_{jk}(x+a)$$

where $f_{jk}(x)$ is a linear distribution with $x \in \mathbb{R}$. In the present implementation, the functions $f_{jk}(x)$ are Student-T distributions, as described previously above. This approximation does not need to be particularly accurate, because it will only be used to locate and characterise modes in each slice; the actual evaluation of the integral via importance sampling in each slice will use the original version.

It is helpful to consider the terms which depend on the phase biases $\phi$ separately.

Define $A(\theta, \mathbf{z})$ and $B(\theta, \mathbf{z}, \phi)$ thus:

$$A(\theta, \mathbf{z}) = \prod_{i=1}^{n} f_i \left( y_i - h_i(\theta, \mathbf{z}) \right)$$

$$B(\theta, \mathbf{z}, \phi) = \prod_{j=1}^{m} \prod_{k=0}^{n_j - 1} \tilde{f}_{jk} \left( y_{jk} - h_{jk}(\theta, \mathbf{z}) - \phi_j \right)$$

Then Equation (2) becomes

$$\text{prob}(\theta \mid \mathbf{y}, I) \cdot S = \int_{\mathbf{z} \in \mathbb{R}^p} \int_{\boldsymbol{\phi} \in [0,1]^m} A(\theta, \mathbf{z}) \cdot B(\theta, \mathbf{z}, \boldsymbol{\phi}) \, d\boldsymbol{\phi} \, d\mathbf{z}$$

$$= \int_{\mathbf{z} \in \mathbb{R}^p} A(\theta, \mathbf{z}) \cdot \int_{\boldsymbol{\phi} \in [0,1]^m} B(\theta, \mathbf{z}, \boldsymbol{\phi}) \, d\boldsymbol{\phi} \, d\mathbf{z}$$

The wrapped phase measurement error distribution can be substituted into the phase term:

$$\int_{\boldsymbol{\phi} \in [0,1]^m} B(\theta, \mathbf{z}, \boldsymbol{\phi}) \, d\boldsymbol{\phi} \approx \int_{\boldsymbol{\phi} \in [0,1]^m} \prod_{j=1}^{m} \prod_{k=0}^{n_j-1} \sum_{a_{jk}=-\infty}^{\infty} f_{jk} \left( y_{jk} - h_{jk}(\theta, \mathbf{z}) - \phi_j + a_{jk} \right) d\boldsymbol{\phi}$$

This sets the stage for the rest of the transformation, because the combination of integration, product, and sum operations can be manipulated into the form we want (i.e. a mixture). For convenience, we will define a symbol for this term:

$$C(\theta, \mathbf{z}) = \int_{\boldsymbol{\phi} \in [0,1]^m} \prod_{j=1}^{m} \prod_{k=0}^{n_j-1} \sum_{a_{jk}=-\infty}^{\infty} f_{jk} \left( y_{jk} - h_{jk}(\theta, \mathbf{z}) - \phi_j + a_{jk} \right) d\boldsymbol{\phi}$$

$$(3)$$

so, the marginalised posterior probability density for a given slice then becomes

$$\text{prob}(\theta \mid \mathbf{y}, I) \cdot S \approx \int_{\mathbf{z} \in \mathbb{R}^p} A(\theta, \mathbf{z}) \cdot C(\theta, \mathbf{z}) \, d\mathbf{z}$$

$$(4)$$

Because each $f_{jk}(x)$ in Equation (3) depends on only one phase bias $\phi_j$, the multivariate integral can become a product of univariate integrals:

$$C(\theta, \mathbf{z}) = \prod_{j=1}^{m} \int_{\phi_j \in [0,1]} \prod_{k=0}^{n_j-1} \sum_{a_{jk}=-\infty}^{\infty} f_{jk} \left( y_{jk} - h_{jk}(\theta, \mathbf{z}) - \phi_j + a_{jk} \right) d\phi_j$$

We can then define the contribution from each of the phase biases:

$$C_j(\theta, \mathbf{z}) = \int_{\phi_j \in [0,1]} \prod_{k=0}^{n_j-1} \sum_{a_{jk}=-\infty}^{\infty} f_{jk} \left( y_{jk} - h_{jk}(\theta, \mathbf{z}) - \phi_j + a_{jk} \right) d\phi_j$$

$$C(\theta, \mathbf{z}) = \prod_{j=1}^{m} C_j(\theta, \mathbf{z})$$

**Transforming the integration domain**

Each phase bias $\phi_j$ must have at least one associated observation (i.e., $n_j \geq 1$ for all j). We will take the first of these observations ($y_{j0}$), and pull it out from main product term:

$$C_j(\theta, \mathbf{z}) = \int_{\phi_j \in [0,1]} \left( \sum_{a_{j0}=-\infty}^{\infty} f_{j0}\left(y_{j0} - h_{j0}(\theta, \mathbf{z}) - \phi_j + a_{j0}\right) \right) \cdot$$

$$\prod_{k=1}^{n_j-1} \sum_{a_{jk}=-\infty}^{\infty} f_{jk}\left(y_{jk} - h_{jk}(\theta, \mathbf{z}) - \phi_j + a_{jk}\right) d\phi_j$$

We can then change the domain of integration (see step 320 in Fig. 3), which replaces the summation on the first observation for each phase bias:

$$C_j(\theta, \mathbf{z}) = \int_{\boldsymbol{\phi_j} \in \mathbb{R}} f_{j0}\left(y_{j0} - h_{j0}(\theta, \mathbf{z}) - \phi_j\right) \cdot \prod_{k=1}^{n_j-1} \sum_{a_{jk}=-\infty}^{\infty} f_{jk}\left(y_{jk} - h_{jk}(\theta, \mathbf{z}) - \phi_j + a_{jk}\right) d\boldsymbol{\phi}$$

In this form, $a_{jk}$ is defined only for $k \in [1, n_j - 1]$, so the total number of these terms is:

$$n_a = \sum_{j=1}^{m} (n_j - 1)$$

We can combine all these into one object $\mathbf{a} \in \mathbb{Z}^{n_a}$.

## Forming a mixture

Via distributivity, we can write a product of sums as a sum of products:

$$C_j(\theta, \mathbf{z}) = \int_{\boldsymbol{\phi_j} \in \mathbb{R}} f_{j0}\left(y_{j0} - h_{j0}(\theta, \mathbf{z}) - \phi_j\right) \cdot \sum_{\mathbf{a}_j \in \mathbb{Z}^{n_j-1}} \prod_{k=1}^{n_j-1} f_{jk}\left(y_{jk} - h_{jk}(\theta, \mathbf{z}) - \phi_j + a_{jk}\right) d\boldsymbol{\phi}$$

Here $\mathbf{a}_j$ gathers all the $a_{jk}$ terms for a given j. Taking the $y_{j0}$ term inside the summation gives:

$$C_j(\theta, \mathbf{z}) = \int_{\boldsymbol{\phi_j} \in \mathbb{R}} \sum_{\mathbf{a}_j \in \mathbb{Z}^{n_j-1}} f_{j0}\left(y_{j0} - h_{j0}(\theta, \mathbf{z}) - \phi_j\right) \cdot \prod_{k=1}^{n_j-1} f_{jk}\left(y_{jk} - h_{jk}(\theta, \mathbf{z}) - \phi_j + a_{jk}\right) d\boldsymbol{\phi}$$

We can substitute this into Equation (4) and rearrange to obtain:

$$\mathrm{prob}(\theta \mid \mathbf{y}, I) \cdot S \approx \int_{\mathbf{z} \in \mathbb{R}^p} \int_{\boldsymbol{\phi} \in \mathbb{R}^m} \sum_{\mathbf{a} \in \mathbb{Z}^{n_a}} \prod_{i=1}^{n} f_i\left(y_i - h_i(\theta, \mathbf{z})\right)$$

$$\cdot \prod_{j=1}^{m} f_{j0}\left(y_{j0} - h_{j0}(\theta, \mathbf{z}) - \phi_j\right)$$

$$\cdot \prod_{j=1}^{m} \prod_{k=1}^{n_j-1} f_{jk}\left(y_{jk} - h_{jk}(\theta, \mathbf{z}) - \phi_j + a_{jk}\right) d\boldsymbol{\phi}\, d\mathbf{z}$$

$$(5)$$

This is step 330 in Fig. 3. The individual univariate distributions within each product term are linear (that is, not wrapped) distributions. In the present case, they are Student-T distributions; of course, other suitable models of the error distribution could be used in place of this type.

**Identifying significant components**

Equation (5) is a mixture which contains an infinite number of components, so it is not immediately obvious the transformation is helpful. However, most of the mass of the distribution will typically be contained in a small number of components, and the next task is therefore to identify these significant components.

The unnormalised posterior for a single mixture component in equation (5) is:

$$g(\theta, \mathbf{z}, \boldsymbol{\phi}, \mathbf{a}) = \prod_{i=1}^{n} f_i\left(y_i - h_i(\theta, \mathbf{z})\right)$$

$$\cdot \prod_{j=1}^{m} f_{j0}\left(y_{j0} - h_{j0}(\theta, \mathbf{z}) - \phi_j\right)$$

$$\cdot \prod_{j=1}^{m} \prod_{k=1}^{n_j-1} f_{jk}\left(y_{jk} - h_{jk}(\theta, \mathbf{z}) - \phi_j + a_{jk}\right)$$

$$(6)$$

Identifying significant components means finding the feasible set of components $\Omega$ such that the total mass of each component is above some threshold $t$:

$$\Omega = \left\{\mathbf{a} \in \mathbb{Z}^{n_a} : \iiint g(\theta, \mathbf{z}, \boldsymbol{\phi}, \mathbf{a}) \, d\boldsymbol{\phi}\, d\mathbf{z}\, d\theta > t\right\}$$

Whilst this is a well specified problem, it is computationally expensive to evaluate. Instead, we approximate Equation (6) with a multivariate normal distribution, and use this to identify an approximate feasible set $\Omega'$.

Bundling $\theta$, $\mathbf{z}$, $\boldsymbol{\phi}$, and $\mathbf{a}$ into a vector $\beta$, and temporarily relaxing the integer constraint on a, we obtain a nonlinear function $g(\beta)$ with $\beta \in \mathbb{R}^{1+p+m+n_a}$. Define a cost function $c(\beta)$ as the negative log likelihood:

$$c(\boldsymbol{\beta}) = -\log\left(g(\boldsymbol{\beta})\right)$$

This is the "float" cost function mentioned above in relation to step 410 in Fig. 4. The minimum of this cost function is found in step 420, as already described. Defining the minimum cost solution as $\beta^*$, the cost function can be approximated via a second order Taylor expansion:

$$c(\boldsymbol{\beta}^* + \delta\boldsymbol{\beta}) \approx c(\boldsymbol{\beta}) + 1/2\, \delta\boldsymbol{\beta}^\top H \delta\boldsymbol{\beta}$$

$$(7)$$

where H is the Hessian matrix of $c(\beta)$ at $\beta = \beta^*$.

$$H = d^2 c / d\boldsymbol{\beta}^2 \,|_{\boldsymbol{\beta}=\boldsymbol{\beta}^*}$$

Note that the gradient term is omitted in Equation (7) because $\beta^*$ is a local minimum, and hence the gradient of $c$ $(\beta)$ is zero. With this approximation, the cost function (negative log likelihood) is a simple quadratic, and hence the likelihood is a multivariate normal distribution $\mathcal{N}(\boldsymbol{\mu}, \Sigma)$ with location parameter $\boldsymbol{\mu} = \beta^*$ and covariance $\Sigma = H^{-1}$. In other words, the cost function is approximated in the vicinity of the minimum $\beta^*$ by a multivariate Gaussian (step 430). This Gaussian distribution is characterized by the Hessian matrix H (see step 441). Marginalisation over $\theta$, $\mathbf{z}$, and $\phi$ is then trivial, by truncating $\beta^*$ and $\Sigma$ to the parts corresponding to the a parameters (a* and $\Sigma_\mathbf{a}$):

$$\boldsymbol{\beta}^* = \begin{bmatrix} \theta^* \\ \mathbf{z}^* \\ \boldsymbol{\phi}^* \\ \mathbf{a}^* \end{bmatrix} \qquad \Sigma = \begin{bmatrix} \Sigma_\theta & \Sigma_{\theta\mathbf{z}} & \Sigma_{\theta\boldsymbol{\phi}} & \Sigma_{\theta\mathbf{a}} \\ \Sigma_{\mathbf{z}\theta} & \Sigma_\mathbf{z} & \Sigma_{\mathbf{z}\boldsymbol{\phi}} & \Sigma_{\mathbf{z}\mathbf{a}} \\ \Sigma_{\boldsymbol{\phi}\theta} & \Sigma_{\boldsymbol{\phi}\mathbf{z}} & \Sigma_{\boldsymbol{\phi}} & \Sigma_{\boldsymbol{\phi}\mathbf{a}} \\ \Sigma_{\mathbf{a}\theta} & \Sigma_{\mathbf{a}\mathbf{z}} & \Sigma_{\mathbf{a}\boldsymbol{\phi}} & \Sigma_\mathbf{a} \end{bmatrix}$$

At this point, we can enforce the constraint that the values in a should be integers, and hence obtain our approximate feasible set:

$$\Omega' = \left\{ \mathbf{a} \in \mathbb{Z}^{n_a} : \|\mathbf{a}^* - \mathbf{a}\|_{\Sigma_\mathbf{a}}^2 \leq \chi^2 \right\}$$

with the weighted squared norm $\|.\|_{\Sigma_\mathbf{a}}^2 = (.)^\top \Sigma_\mathbf{a}^{-1}(.)$, and search threshold $\chi^2$. The weighted squared norm here is the one described above in connection with step 442. In terms of numerical evaluation, this is a problem which is already well explored in the context of integer ambiguity resolution, and efficient algorithms are available (e.g., the LAMBDA algorithm as proposed above in connection with steps 610 and 630 of Fig. 6). It should be understood that the LAMBDA algorithm is being used in a different context, here, compared with its originally intended use. The original use of LAMBDA was to 'fix' ambiguities, or more specifically to identify the maximum likelihood set of ambiguities, and then to quantify the probability that this was in error (via the ratio test). In our case, we are repurposing LAMBDA to provide an efficient search for important ambiguity sets (i.e. sets with non-negligible probability). In the present case, therefore, the LAMBDA algorithm is used to find more than two (in practice, many more than two) sets of ambiguities.

A reasonable search threshold $\chi^2$ can be conveniently selected by identifying the maximum likelihood component (see step 610), evaluating its weighted squared norm (see step 620), and then setting $\chi^2$ at a fixed depth below this.

All that remains is to "peak up" on the local maximum in the posterior probability density (respectively, the local minimum in the integer constrained cost-function), using a local search (steps 448 and 449). The final output of this local search is the state vector associated with the mode, and the Hessian matrix characterising the curvature of the cost function at that location.

As mentioned previously above, this information is then used to support the inference - in the present example, supporting numerical integration over the slices.

It should be understood that the scope of the present disclosure is not limited to the examples described above. Many variations will be apparent to those skilled in the art, based on the foregoing description.

The specific parametric distributions (for example, Student-T distributions) used in the examples above are not limiting. Those skilled in the art may select other distributions (parametric or non-parametric) that have the general characteristics explained above.

Similarly, different numerical methods may be used - for example, for the local search (i.e., using nonlinear optimizers other than the hybrid between Newton's method and steepest descent) and/or for numerical integration. For example, suitable alternative nonlinear optimization algorithms include, but are not limited to, the Levenburg-Marquardt algorithm. The numerical integration over the slices was performed using the trapezoidal rule, in the example above. This is not essential - other integration techniques could be applied.

As mentioned already above, although the examples have focused largely on the calculation of state bounds (in particular, position bounds in the form of a protection level), the slicing and mode-finding may be useful for calculating state information other than (or in addition to) state bounds. For instance, the slices/modes can be used for calculating maximum-likelihood estimates of the state itself.

Although in the examples above the state vector included position variables, and the state information to be inferred concerned the position estimate and/or position bounds, this is not limiting. In other examples, the state vector might not include position variables and/or the state information to be inferred might concern other state variables. For instance, the position of the GNSS receiver might be known (or indeed fixed - as may be the case for a terrestrial reference station). The ultimate goal of processing the GNSS measurements may be to infer information about other state variables, such as a time estimate at the GNSS receiver, atmospheric parameters, errors in the orbits of the satellites, or errors in the satellite clocks. In such examples, the integer ambiguities in the carrier phase measurements may still give rise to modes in the posterior probability density for the state variable(s) of interest. Therefore, it may be desirable to identify such modes explicitly, for the same reasons that it is desirable when attempting to infer state information relating to position. Likewise, the slicing of the integral may be desirable for the same reasons as before - in particular, to improve the accuracy of the integral in "tail" regions of the posterior probability density.

In general, in the flowcharts of Figs. 2A to 6, the arrows between the steps do not necessarily imply a causal relationship between those steps. They merely indicate one exemplary order in which the steps may be performed. Method steps may be carried out in a different order from the exemplary order shown in the drawings.

In the examples described above, each mode was characterized by the coordinates, in state-space, of the respective local maximum of the posterior probability density. Using a unique point in state space to characterise each mode provides a compact and convenient way to specify the modes. However, it is not the only way to specify them. In other examples, one or more modes could be characterised (alternatively or additionally to using the coordinates of the local maximum) by defining a finite region of state space corresponding to the mode. For instance, a region of state-space could be defined by a bounding volume, within which the respective local maximum of the posterior probability density is located. The bounding volume may be defined by specifying the upper and lower limits of a range for each state variable. This defines a box in the state-space. In some instances, the bounding volume may be selected so that the posterior probability density decreases monotonically from the local maximum, within the bounding volume.

In the examples described above, the LAMBDA algorithm was used to find candidate sets of integer ambiguities - that is, to fix the integer ambiguities in the respective carrier phases. This is one convenient, efficient, effective, and widely used algorithm; however, it is not essential to use it.

An example of a systematic search for modes was described above. It should be understood that other systematic search methods could be substituted in its place. One suitable example of another algorithm for a systematic search is described in European Patent Application No. 23168078.6, filed on 14 April 2023 by the present applicant. EP 23168078.6 is hereby incorporated by reference in the present disclosure.

It should be understood that various components illustrated in Fig. 1 may be implemented in hardware, or software, or a mixture of both. Furthermore, some components may be grouped together in a given implementation or may be implemented separately. In the present implementation, block 105 is implemented entirely in hardware, block 110 is implemented partially in hardware, and the remaining components (downstream in the signal processing chain) are implemented in software. In some examples, the navigation filter 122 may be implemented in a separate software module, running on a separate processor from the processor 120. Other implementations are possible, which divide and distribute the various functions differently between hardware and software, or between different hardware components, software modules and/or processors running the software.

In the claims, any reference signs placed between parentheses shall not be construed as limiting the claim. The word "comprising" does not exclude the presence of elements or steps other than those listed in a claim. However, where the word "comprising" is used, this also discloses as a special case the possibility that the elements or steps listed are exhaustive - that is, the apparatus or method may consist solely of those elements or steps. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, or CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

**Claims**

1. A method of processing a plurality of GNSS measurements, comprising:

   obtaining (210) the plurality of GNSS measurements;
   defining (220) a state vector, wherein the state vector comprises state variables;
   obtaining (230) a posterior probability density for the state vector, wherein the posterior probability density is based on one or more residual error models describing a probability distribution of errors in each of the GNSS measurements, the one or more residual error models including at least one non-Gaussian model, wherein the posterior probability density has a number of dimensions, each dimension corresponding to one of the state variables; and
   inferring (232) state information based on the posterior probability density, wherein the inferring comprises integrating the posterior probability density,
   wherein the integrating comprises, for one of the state variables:

      dividing (234) a domain of the posterior probability density into a plurality of slices along the dimension associated with said one state variable;
      integrating (236) separately each slice of the plurality of slices to produce a respective integration result for each slice; and
      combining (238) the integration results for the slices.

2. The method of claim 1, wherein the inferred state information comprises at least one of:

   a state estimate; and
   an error bound for the state estimate.

3. The method of claim 1 or claim 2 wherein integrating (236) each slice separately comprises, for every slice, at least one of:

   importance sampling;
   an MCMC method; and
   approximation of the posterior probability density with a mathematical model which can be integrated analytically.

4. The method of any one of claims 1 to 3, wherein the integrating comprises, for each slice:

performing a search (240) in that slice, to identify a set of modes of the posterior probability density, and wherein the integrating (252) is based on the identified set of modes.

5. The method of claim 4, wherein integrating (236) each slice separately comprises, for every slice, at least one of:

importance sampling based on the identified set of modes;
an MCMC method based on the identified set of modes; and
approximation of the posterior probability density with a mathematical model which can be integrated analytically, wherein the mathematical model is based on the identified set of modes.

6. The method of any one of claims 4 to 5, wherein the search is a systematic search.

7. The method of any one of claims 4 to 6, wherein the search comprises:

transforming (242) the posterior probability density into a mixture model comprising a plurality of mixture components, wherein each mixture component is a multivariate distribution; and
identifying (244) the set of modes using the mixture model,
wherein each mode is associated with a respective one of the multivariate distributions.

8. The method of claim 7, wherein transforming (242) the posterior probability density comprises:

defining (310) a wrapped distribution for each carrier phase measurement; and
transforming (330) the wrapped distributions into the mixture model,
wherein each mode is associated with a set of integers, a, each integer being associated with a respective one of the carrier phase measurements,
wherein each integer indexes a number of cycles in the respective wrapped distribution.

9. The method of claim 7 or claim 8, wherein identifying (244) the set of modes comprises:

defining (410) a float cost function based on the mixture model, by relaxing the constraint that each value, a, indexing the number of cycles in the respective carrier phase measurement, is an integer;
performing (420) a first local search of the float cost function to find a float-valued state vector associated with a local minimum value of the cost function;
approximating (430) the float cost function in the region of the local minimum value by a multivariate Gaussian distribution; and
identifying (440) the set of modes based on the approximating multivariate Gaussian distribution.

10. The method of claim 9, wherein the approximating multivariate Gaussian distribution is expressed in the form of a negative log likelihood, wherein the multivariate Gaussian distribution is modelled as a quadratic function.

11. The method of any one of claims 9 to 10, wherein identifying (440) the set of modes based on the approximating multivariate Gaussian distribution comprises characterising (441) the approximating multivariate Gaussian distribution in the region of the local minimum value by a matrix, being one of: a covariance matrix; and a Hessian matrix.

12. The method of claim 11, wherein identifying (440) the set of modes based on the approximating multivariate Gaussian distribution further comprises, based on the state vector associated with the local minimum and the matrix,

defining (442) a weighted squared norm based on the matrix; and
identifying (443) candidate sets of integers, a, that are less than a threshold distance from the local minimum according to the weighted squared norm.

13. The method of claim 12, wherein identifying (443) the candidate sets of integers comprises:

identifying (610) a maximum likelihood candidate set of integers;
evaluating (620) a first weighted squared norm associated with the maximum likelihood candidate set of integers; and
identifying (630) other candidate sets of integers having a weighted squared norm within a predetermined search threshold of the first weighted squared norm.

**14.** A computer program comprising computer program code configured to cause one or more processors to perform all the steps of the method as claimed in any one of the preceding claims when said computer program is run on said one or more processors.

**15.** A GNSS receiver (100) comprising:

a signal processing unit (110), configured to produce a plurality of GNSS measurements; and
at least one processor (120), configured to:

obtain (210) the plurality of GNSS measurements;
define (220) a state vector, wherein the state vector comprises state variables;
obtain (230) a posterior probability density for the state vector, wherein the posterior probability density is based on one or more residual error models describing a probability distribution of errors in each of the GNSS measurements, the one or more residual error models including at least one non-Gaussian model, wherein the posterior probability density has a number of dimensions, each dimension corresponding to one of the state variables; and
infer (232) state information based on the posterior probability density, wherein the inferring comprises integrating the posterior probability density,

wherein the integrating comprises, for one of the state variables:

dividing (234) a domain of the posterior probability density into a plurality of slices along the dimension associated with said one state variable;
integrating (236) separately each slice of the plurality of slices to produce a respective integration result for each slice; and
combining (238) the integration results for the slices.

FIG. 1

Obtain measurements — 210

Define state vector — 220

Obtain posterior probability density — 230

Infer state information — 232

# FIG. 2A

Divide posterior probability density into slices — 234

Integrate each slice — 236

Combine integration results — 238

# FIG. 2B

Search for modes    ⌐240

Transform posterior into
mixture model    ⌐242

Identify set of modes using
mixture model    ⌐244

Numerical integration
guided by modes    ⌐252

# FIG. 2C

242

```
┌─────────────────────────────────┐
│   Define wrapped distribution   │──── 310
└─────────────────────────────────┘
                 │
                 ▼
┌─────────────────────────────────┐
│   Transform integration domain  │──── 320
└─────────────────────────────────┘
                 │
                 ▼
┌─────────────────────────────────┐
│  Transform wrapped distribution │
│       into mixture model        │──── 330
└─────────────────────────────────┘
```

# FIG. 3

244

```
┌─────────────────────────────────┐
│    Define float cost function   │──── 410
└─────────────────────────────────┘
                 │
                 ▼
┌─────────────────────────────────┐
│  Local search of float cost function │
│          to find minimum        │──── 420
└─────────────────────────────────┘
                 │
                 ▼
┌─────────────────────────────────┐
│  Approximate float cost function │
│      around minimum by Gaussian  │──── 430
└─────────────────────────────────┘
                 │
                 ▼
┌─────────────────────────────────┐
│    Identify set of modes based on │
│       approximating Gaussian     │──── 440
└─────────────────────────────────┘
```

# FIG. 4

Characterize Gaussian by Hessian — 441

↓

Define weighted squared norm — 442

↓

Identify candidate sets of integers within threshold distance of the minimum (according to weighted squared norm) — 443

↓

Repeat for each candidate set of integers {

Define integer-constrained cost function — 448

↓

Local search of integer-constrained cost function — 449

↓                    ↓

Local minimum (mode)        Hessian

# FIG. 5

443

| Run LAMBDA to identify maximum likelihood candidate set of integers | 610 |

| Evaluate weighted squared norm for maximum likelihood candidate set | 620 |

| Run LAMBDA again to identify other candidate sets | 630 |

# FIG. 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3859397 A1

- EP 23168078

**Non-patent literature cited in the description**

- **K. MADSEN ; H.B. NIELSEN ; O. TINGLEFF**. *METHODS FOR NON-LINEAR LEAST SQUARES PROBLEMS*, 2004

- **TEUNISSEN P**. The least-squares ambiguity decorrelation adjustment: a method for fast GPS integer ambiguity estimation. *J Geod*, 1995, vol. 70 (1-2), 65-82